# EUROPÄISCHE PATENTANMELDUNG

(11) **EP 1 728 840 A1**
(43) Veröffentlichungstag der Anmeldung: **06.12.2006**
(21) Anmeldenummer: 05104733.0
(22) Anmeldetag: 01.06.2005
(51) Int. Cl.: C09J 5/02

(54) **Applikations- und Verklebungsverfahren**

(71) Anmelder: Sika Technology AG, 6340 Baar (CH)
(72) Erfinder: Jäger, Urs, 8645, Jona (CH); Tobler, David, 8406, Winterthur (CH); Koch, Reto, 5453, Remetschwil (CH); Schlumpf, Michael, 8953, Dietikon (CH)
(74) Vertreter: Isler, Jörg

(57) **Zusammenfassung**

Die Erfindung betrifft ein Verfahren zur Applikation eines feuchtigkeitshärtenden Kleb- oder Dichtstoffes sowie ein Kleb- oder Dichtstoff, welcher nach dem erfindungsgemässen Verfahren appliziert wurde. Zusätzlich betrifft die Erfindung ein Verfahren zum Verkleben und/oder Abdichten von mindestens zwei Substraten, wobei vorzugsweise mindestens ein Substrat Glas ist.

## Beschreibung

### Technisches Gebiet

Die Erfindung betrifft ein Verfahren zur Applikation eines feuchtigkeitshärtenden Kleb- oder Dichtstoffes sowie ein Kleb- oder Dichtstoff, welcher nach dem erfindungsgemässen Verfahren appliziert wurde. Zusätzlich betrifft die Erfindung ein Verfahren zum Verkleben und/oder Abdichten von mindestens zwei Substraten, wobei vorzugsweise mindestens ein Substrat Glas ist.

### Stand der Technik

Einkomponentige feuchtigkeitshärtende Silan- oder Isocyanatgruppen aufweisende Prepolymere werden seit langem als Kleb- oder Dichtstoffe eingesetzt. Derartige einkomponentige Kleb- oder Dichtstoffe haben den Nachteil, dass sie langsam aushärten und dass die Aushärtungsgeschwindigkeit von der Luftfeuchtigkeit der Umgebung abhängt, d.h. dass sie in Gegenden mit tiefer Luftfeuchtigkeit oder in geschlossenen Systemen fast nicht aushärten. Um die Aushärtung zu beschleunigen, kann zum Beispiel Wasser als eine zweite Komponente über komplizierte Mischsysteme in feuchtigkeitshärtende Prepolymere eingemischt werden. Als Mischsysteme werden zum Beispiel Statikmischer verwendet, welche unter anderem dem schichtweisen Einmischen einer Beschleunigerkomponente in Einkomponentenklebstoffe dienen. Solche Mischer haben den Nachteil, dass es beim Erzeugen und Applizieren von Klebstoffraupen häufig zu Fehlklebungen kommt, weil eine oder mehrere der eingemischten Schichten einer normalerweise nicht selbstaushärtenden Beschleunigerkomponente im Aussenbereich der Klebstoffraupe an die zu verklebende Oberfläche angrenzen, was zu Schwachstellen in der Haftung führt.

Andere zweikomponentige Systeme sind bekannt. In diesen Systemen liegt als zweite Komponente eine andere Komponente als Wasser vor, welche mit feuchtigkeitshärtenden Prepolymeren vermischt wird, was zu einer Additionspolymerisation führt. Dabei ist es besonders wichtig, dass eine homogene Mischung erreicht wird und dass die zweite Komponente genau im richtigen Mischverhältnis zudosiert wird. Zusätzlich wird die Offenzeit im Vergleich zu einkomponentigen Kleb- oder Dichtstoffen stark reduziert. Ein Nachteil dieser zweikomponentigen Systemen ist, dass auf Grund der unterschiedlichen Viskosität der zwei Komponenten nur unter grossem Aufwand, z.B. mit Hilfe von Statikmischern, eine im wesentlichen homogene Mischung erhalten werden kann. Daher werden aufwendige Dosier- und Mischverfahren sowie sehr aufwendige Anlagetechnik benötigt, was teuer ist und zusätzlich zu Qualitätsschwankungen führt.

### Darstellung der Erfindung

Die Aufgabe der vorliegenden Erfindung ist es daher, ein Verfahren bereitzustellen, welches die Nachteile des Standes der Technik überwindet, welches eine einfache Applikation eines Kleb- oder Dichtstoffes auf eine Substratoberfläche ermöglicht, welches günstig ist, und welches auch in Gebieten mit tiefer Luftfeuchtigkeit oder in abgeschlossenen Systemen das Aushärten von feuchtigkeitshärtenden Kleb- oder Dichtstoffen ermöglicht und somit unabhängig von Luftfeuchtigkeitsunterschieden ist.

Überraschenderweise wurde gefunden, dass ein Verfahren zur Applikation eines feuchtigkeitshärtenden Kleb- oder Dichtstoffes und ein Verfahren zum Verkleben gemäss der unabhängigen Ansprüche diese Aufgabe löst. Bei der vorliegenden Erfindung handelt es sich um ein Verfahren zur Applikation eines feuchtigkeitshärtenden Kleb- oder Dichtstoffes, umfassend die Schritte: (a) Einbringen mindestens eines Stroms einer Nebenkomponente B, umfassend Wasser, über eine Rohrleitung ins Innere eines Stroms einer Hauptkomponente A einer Zusammensetzung umfassend mindestens ein Prepolymer mit mindestens zwei feuchtigkeitsreaktiven Gruppen, unter Bildung eines Kleb- oder Dichtstoffstroms AB, bei welchem die Nebenkomponente B vollständig von der Hauptkomponente A ummantelt ist und die Nebenkomponente B im wesentlichen nicht mit der Hauptkomponente A vermischt ist; und (b) Kontaktieren mindestens einer Oberfläche mindestens eines Substrats mit dem Kleb- oder Dichtstoffstrom AB. Vorzugsweise erfolgt Schritt (a) ohne Mischer. Es ist selbstverständlich, dass am Übergang zwischen der Nebenkomponente B und der Hauptkomponente A ein Bereich entsteht, in dem ein kleiner Teil von Nebenkomponente B und Hauptkomponente A gemischt vorliegt.

Dabei wird ein Nebenkomponentenstrom B umfassend Wasser über eine Rohrleitung ins Innere eines Hauptkomponentenstroms A eingebracht unter Bildung eines Kleb- oder Dichtstoffstroms AB, bei welchem die Nebenkomponente B vollständig von der Hauptkomponente A ummantelt ist und welcher mit mindestens einer Oberfläche mindestens eines Substrats in Kontakt gebracht wird. Schritt (a) des erfindungsgemässen Verfahrens, vorzugsweise das gesamte Applikationsverfahren, erfolgt vorzugsweise ohne Mischer, so dass die Haupt- und Nebenkomponente nicht umgeschichtet und nicht miteinander durchmischt werden, sondern dass die Nebenkomponente als zumindest teilweise durchgehender Strom in der Hauptkomponente vorliegt, so dass im Kleb- und-/oder Dichtstoffstrom AB mindestens ein unvermischter, d.h. nicht mit Hauptkomponente A vermischter Nebenkomponentenstrom B und ein unvermischter, d.h. nicht mit Nebenkomponente B vermischter Hauptkomponentenstrom A vorliegt, und dass die Hauptkomponente die Nebenkomponente vollständig ummantelt, so dass die Nebenkomponente nicht mit einer Substratoberfläche in Kontakt kommt.

Unter dem Begriff "Mischer" wird hier irgend ein Mischer, wie z.B. Statikmischer oder dynamischer Mischer verstanden, der mehrere Schichten durchmischt und umschichtet, so dass die mehreren Komponenten mehr oder weniger homogen miteinander vermischt sind.

Die Vorteile der Erfindung sind unter anderem darin zu sehen, dass die Aushärtung der durch das erfindungsgemässe Verfahren applizierten Kleb- oder Dichtstoffe stark beschleunigt wird, so dass sogar in abgeschlossenen Systemen oder in Gebieten mit wenig Umgebungsfeuchte wie z.B. im Winter in Kanada, Sibirien oder Skandinavien, die komplette Aushärtung von Klebstoffraupen oder Dichtstofffugen innerhalb von wenigen Tagen, vorzugsweise von einem Tag oder weniger ermöglicht wird und somit die Aushärtungsgeschwindigkeit unabhängig von der Luftfeuchtigkeit der Umgebung ist. Zusätzlich wird erreicht, dass auch hochmodulige Kleb- oder Dichtstoffe, d.h. Kleb- oder Dichtstoffe mit einem G-Modul von etwa 2.5 MPa bis 6 MPa und sogar ultrahochmodulige Kleb- oder Dichtstoffe, d.h. Kleb oder Dichtstoffe mit einem G-Modul von über 6 MPa bis zu 50 MPa, vorzugsweise 10 bis 20 MPa, hergestellt werden können, welche zur Durchhärtung eine grosse Feuchtigkeitsmenge benötigen. Durch das erfindungsgemässe Verfahren härten auch ultrahochmodulige Kleb- oder Dichtstoffe schnell durch.

Ein weiterer Vorteil der Erfindung ist darin zu sehen, dass keine aufwendige Dosier- und Anlagetechnik verwendet werden muss, da keine Mischer nötig sind und eine Überdosierung der Nebenkomponente erwünscht ist. Im Gegensatz zu herkömmlichen Klebe- und Applikationsverfahren ist eine genaue Dosierung und ein genaues Mischverhältnis nicht wesentlich und das System ist nicht von der Viskosität der verwendeten Komponenten abhängig. Des weiteren hat der durch das erfindungsgemässe Verfahren applizierte Kleb- oder Dichtstoff trotz schneller Aushärtung eine lange Offenzeit. Ein weiterer Vorteil ist, dass beim durch das erfindungsgemässe Verfahren applizierte Kleb- oder Dichtstoff keine oder wenig Blasenbildung auftritt.

Das erfindungsgemässe Applikationsverfahren ermöglicht, dass die Nebenkomponente B vollständig von der Hauptkomponente A ummantelt ist. Dies führt zu einer guten Haftung des Kleb- oder Dichtstoffs auf mindestens einer Substratoberfläche und verhindert, dass es zu Fehlklebungen kommt, was der Fall wäre, wenn die Nebenkomponente B mit der Substratoberfläche in Kontakt kommen würde.

Weitere vorteilhafte Ausgestaltungen der Erfindung ergeben sich aus den Unteransprüchen.

Beim erfindungsgemässen Verfahren wird in einem ersten Schritt in einer Applikationsapparatur vorzugsweise über mindestens eine Zuleitung ein Hauptkomponentenstrom A einer Zusammensetzung umfassend mindestens ein Prepolymer mit mindestens zwei feuchtigkeitsreaktiven Gruppen in ein Gehäuse eingeführt, und mindestens ein Nebenkomponentenstrom B umfassend Wasser wird über mindestens eine Rohrleitung durch eine Öffnung ins Innere des Hauptkomponentenstroms A eingebracht. Die Applikationsapparatur weist zusätzlich vorzugsweise eine Applikationsdüse mit einer Öffnung und vorzugsweise mit einem Ausschnitt auf, durch welche der Kleb- oder Dichtstoffstrom AB auf mindestens eine Oberfläche eines ersten Substrats, vorzugsweise Glas, appliziert wird. Vorzugsweise ist der Ausschnitt ein dreieckiger Ausschnitt, welcher von der Applikationsdüsenspitze her entgegen der Strömungsrichtung spitz zuläuft. Der Ausschnitt kann aber auch eine runde, ovale oder eine andere Form aufweisen. Die Zuleitung und/oder die Applikationsdüse sind entweder separate Teile oder sie können Teile des Gehäuses sein und in einem Stück hergestellt werden. Der Durchmesser der Zuleitung ist beliebig wählbar, er kann zum Beispiel denselben Durchmesser wie das Gehäuse aufweisen. Die Zuleitung besteht vorzugsweise aus demselben Material wie das Gehäuse. Das Material des Gehäuses umfasst vorzugsweise Metall, insbesondere ein Metall, das gegenüber der Hauptkomponente A und der Nebenkomponente B inert ist, oder ein Kunststoff, vorzugsweise aus einem Spritzgussteil aus Kunststoff.

Die mindestens eine Rohrleitung, durch welche die Nebenkomponente B ins Innere der Hauptkomponente A geführt wird, besteht vorzugsweise aus dem selben Material wie das Gehäuse, vorzugsweise aus Metall, kann aber auch aus einem anderen Material bestehen. Die Rohrleitung ist entweder fest am Gehäuse angebracht, oder sie ist verschiebbar, vorzugsweise senkrecht zur Strömungsrichtung der Hauptkomponente A verschiebbar, so dass der Austritt des Nebenkomponentenstroms B durch die Öffnung der Rohrleitung in den Hauptkomponentenstrom A so gewählt werden kann, dass die Nebenkomponente B im applizierten Kleb- oder Dichtstoff in der gewünschten Anordnung vorliegt. Es ist wesentlich, dass die Öffnung der Rohrleitung im Inneren des Hauptkomponentenstroms A liegt, so dass die Nebenkomponente B vollständig von der Hauptkomponente A ummantelt wird. In einer weiteren Ausführungsform kann die Öffnung der Rohrleitung im Bereich der Applikationsdüse, vorzugsweise nahe beim Austritt des Kleb- oder Dichtstoffstroms AB aus der Applikationsdüse vorliegen.

Die Rohrleitung zum Einbringen des Nebenkomponentenstroms B ins Innere des Hauptkomponentenstroms A hat mindestens eine Öffnung, welche im Inneren der Hauptkomponente A vorliegt. Die Öffnung der Rohrleitung kann wahlweise rund, oval oder eckig, beispielsweise drei- oder viereckig, sein, vorzugsweise ist sie rund. Die Form der Öffnung der Rohrleitung kann entweder durch die Form der Rohrleitung oder den Einsatz einer Düse gewählt werden. Die mindestens eine Öffnung der Rohrleitung, durch welche die Nebenkomponente B ins Innere der Hauptkomponente A eingebracht wird, ist vorzugsweise eine Düse, zum Beispiel eine plattenförmige Düse. Die Rohrleitung kann auch mehr als eine Öffnung, vorzugsweise zwei oder drei Öffnungen aufweisen, durch welche die Nebenkomponente B ins Innere der Hauptkomponente A eingebracht wird, unter Bildung von mehr als einem Strom, vorzugsweise zwei oder drei Ströme der Nebenkomponente B im Inneren des Hauptkomponentenstroms A. Zur Bildung von mehr als einer Öffnung der Rohrleitung kann die Rohrleitung verzweigt werden, so dass zum Beispiel im Bereich des Austritts des Nebenkomponentenstroms B ins Innere des Hauptkomponentenstroms A mehr als eine Rohrleitung, vorzugsweise zwei oder drei Rohrleitungen oder mehr, vorliegen. Es kann aber auch eine Düse mit mehr als einer Öffnung verwendet werden.

In einer anderen Ausführungsform wir die Nebenkomponente B über mehr als eine Rohrleitung, vorzugsweise zwei oder drei Rohrleitungen, ins Innere der Hauptkomponente A eingebracht unter Bildung von mehr als einem, vorzugsweise zwei oder drei Nebenkomponentenströme B im Inneren des Hauptkomponentenstroms A. Es ist wesentlich, dass auch bei mehr als einem Nebenkomponentenstrom B im Inneren des Hauptkomponentenstroms A die Nebenkomponente B nicht an die Oberfläche der Hauptkomponente A gelangt und nicht mit einer Substratoberfläche in Berührung kommt. Dies wird durch die vollständige Ummantelung der mehreren Nebenkomponentenströme durch den Hauptkomponentenstrom erreicht. Es kann aber sein, dass die einzelnen Nebenkomponentenströme im Inneren des Hauptkomponentenstroms in Kontakt sind miteinander und somit nicht jeder einzelne Nebenkomponentenstrom vollständig vom Hauptkomponentenstrom ummantelt sein muss.

Es ist vorteilhaft, wenn im Querschnitt des Kleb- oder Dichtstoffstroms AB zu dessen Strömungs- oder Applikationsrichtung der Massenmittelpunkt des Hauptkomponentenstroms A im Bereich des Massenmittelpunktes des mindestens einen Nebenkomponentenstroms B vorliegt. Besonders vorteilhaft ist es, wenn im Querschnitt des Kleb- oder Dichtstoffstroms AB zu dessen Strömungs- oder Applikationsrichtung der Massenmittelpunkt des mindestens einen Nebenkomponentenstroms B zwischen dem Massenmittelpunkt des Hauptkomponentenstroms A und der mindestens einen Substratoberfläche vorliegt. Dies bringt den Vorteil, dass der Kleb- oder Dichtstoffstrom AB auch auf der nicht der Luft, d.h. nicht der Umgebungsfeuchte zugewandten Seite schnell aushärtet, zum Beispiel wenn die Oberfläche eines ersten Substrats nicht diffusionsdurchlässig, die Oberfläche eines zweiten Substrats aber diffusionsdurchlässig ist. Die gewünschte Anordnung der Nebenkomponente B kann durch die gewählte Anordnung der Öffnung der Rohrleitung erreicht werden.

Die Hauptkomponente A des zu applizierenden Kleb- oder Dichtstoffs umfasst mindestens ein Prepolymer mit mindestens zwei feuchtigkeitsreaktiven Gruppen. Das Prepolymer kann kristallin oder amorph sein. Die mindestens zwei feuchtigkeitsreaktiven Gruppen reagieren mit Wasser unter Bildung einer Species die zur Vernetzung von zwei oder mehreren derartigen Gruppen führt. Bevorzugt sind diese feuchtigkeitsreaktiven Gruppen Alkoxysilan- Gruppen und / oder Isocyanat-Gruppen.

In einer ersten Ausführungsform handelt es sich beim Prepolymer mit mindestens zwei feuchtigkeitsreaktiven Gruppen um ein Polyurethanprepolymer mit mindestens zwei Isocyanat-Gruppen.

Es wird aus der Umsetzung eines Polyisocyanates mit einer Verbindung, welche zwei oder mehrere NCO-reaktive funktionelle Gruppen aufweist. Derartige NCO-reaktive Gruppen sind insbesondere Hydroxyl- und primäre oder sekundäre Amino-Gruppen.

Ein Polyisocyanat enthält zwei oder mehrere NCO-Gruppen und beschreibt hier ein niedermolekulare Verbindung mit einem Molekulargewicht von unter 1000 g/mol. Beispiele für derartige Polyisocyanate sind 2,4- und 2,6-Toluylendiisocyanat (TDI) und beliebige Gemische dieser Isomeren, 4,4'-Diphenylmethandiisocyanat (MDI), die stellungsisomeren Diphenylmethandiisocyanate, 1,3- und 1,4-Phenylendiisocyanat, Oligomere und Polymere der vorgenannten Isocyanate, sowie beliebige Mischungen der vorgenannten Isocyanate. Besonders bevorzugt als Polyisocyanate sind MDI und TDI.

Als Verbindung, welche zwei oder mehrere NCO-reaktive funktionelle Gruppen aufweist, gelten insbesondere polymere Verbindungen.

Beispiele für derartige polymere Verbindungen sind insbesondere Polyole, Polyamine, Polyaminoalkohole zu nennen.

Beispiele für geeignete Polyamine sind aliphatische Polyamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexandiamin, 2,2,4- und 2,4,4-Trimethylhexamethylendiamin und Mischungen davon, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-aminopropyl)amin, 1,5-Diamino-2-methylpentan (MPMD), 1,3-Diaminopentan (DAMP), 2,5-Dimethyl-1,6-hexamethylendiamin, cycloaliphatische Polyamine wie 1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 1-Cyclohexylamino-3-aminopropan, 2,5(2,6)-Bis-(aminomethyl)-bicyclo[2.2.1]heptan (NBDA, hergestellt von Mitsui Chemicals), 3(4),8(9)-Bis-(aminomethyl)-tricyclo[5.2.1.0^{2,6}]decan, 3,9-Bis-(3-aminopropyl)-2,4,8,10-tetraoxaspiro[5.5]undecan, 1,3- und 1,4-Xylylendiamin, Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit theoretisch zwei oder drei Aminogruppen, erhältlich beispielsweise unter dem Namen Jeffamine® (hergestellt von Huntsman Chemicals), aromatische Amine, wie beispielsweise 3,5-Diethyl-2,4(2,6)-diaminotoluol (Lonzacure DETDA®), 3,5-Dimethylthiotoluylendiamin (Ethacure 300®), 4,4'-Methylen-bis-(2,6-diethylanilin) (MDEA), 4,4'-Methylen-bis-(3-chlor-2,6-diethylanilin) (MCDEA), sowie Mischungen der vorgenannten Polyamine.

Beispiele für Polyaminoalkohole sind Diethanolamin, Ethanolamin, Triethanolamin sowie Reaktionsprodukte von Epoxiden mit Aminen, insbesondere von Diglycidylethern mit Polyaminen wie oben beschreiben.

Als Polyole sind insbesondere Polyetherpolyole, Polycarbonatdiole und Polyesterpolyole bevorzugt.

Polyetherpolyole, auch Polyoxyalkylenpolyole genannt, sind insbesondere jene, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.

Besonders geeignet sind Polyoxyalkylendiole oder Polyoxyalkylentriole, insbesondere Polyoxypropylendiole oder Polyoxypropylentriole.

Speziell geeignet sind Polyoxyalkylendiole oder Polyoxyalkylentriole mit einem Ungesättigtheitsgrad tiefer als 0.02 mEq/g und mit einem Molekulargewicht im Bereich von 1000 bis 30'000 g/mol, sowie Polyoxypropylendiole und -triole mit einem Molekulargewicht von 400 bis 8'000 g/mol.

Ebenfalls besonders geeignet sind sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen. Unter ,Molekulargewicht' oder ,Molgewicht' versteht man im vorliegenden Dokument stets das Molekulargewichtsmittel Mₙ.

Als meist bevorzugte Polyetherpolyole gelten Diole mit einem Ungesättigtheitsgrad tiefer als 0.02 mEq/g und mit einem Molekulargewicht im Bereich von 7000 bis 30'000, insbesondere zwischen 10'000 und 25'000 g/mol. Beispielsweise werden derartige Polyether unter dem Handelsnamen Acclaim® von Bayer vertrieben.

Als Polyesterpolyole sind insbesondere jene geeignet, welche hergestellt sind beispielsweise aus zwei- bis dreiwertigen Alkoholen, wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole, mit organischen Dicarbonsäuren oder deren Anhydride oder Ester, wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise aus ε-Caprolacton.

Besonders bevorzugte Polyesterpolyole sind Polyesterpolyole aus Adipinsäure, Sebacinsäure oder Dodecandicarbonsäure als Dicarbonsäure und aus Hexandiol oder Neopentylglycol als zweiwertigen Alkohol. Die Polyesterpolyole weisen bevorzugt ein Molekulargewicht von 1500 bis 15'0000 g/mol, insbesondere von 1500 bis 8000 g/mol, bevorzugt von 2000 bis 5500 g/mol, auf.

Besonders bevorzugte Polyesterpolyole sind Adipinsäure/Hexandiol-Polyester und Dodecandicarbonsäure/Hexandiol-Polyester.

Als Verbindung, welche zwei oder mehrere NCO-reaktive funktionelle Gruppen aufweist, sind bevorzugt Polyole. Als Polyole sind insbesondere Polyesterpolyole und Polyetherpolyole bevorzugt.

Die Herstellung der Polyurethanprepolymere erfolgt in einer bekannten Art und Weise direkt aus den Polyisocyanaten und den NCO-reaktiven Verbindungen, beispielsweise den Polyolen, oder durch schrittweise Adduktionsverfahren, wie sie auch als Kettenverlängerungsreaktionen bekannt sind.

Wesentlich ist, dass die gebildeten Polyurethanprepolymere freie Isocyanat-Gruppen aufweisen und bei Raumtemperatur fest sind. Die Anzahl der Isocyanat-Gruppen ist sehr abhängig von den gewünschten Endeigenschaften des ausgehärteten Klebstoffes.

Bevorzugt sind Polyurethanprepolymere aus Polyolen und Polyisocyanten, insbesondere aus Diolen, Triolen oder Diol/Triol-Mischungen sowie aus Diisocyanaten, Trisocyanaten oder Diisocyanat/Trisocyanat-Mischungen hergestellt.

In einer bevorzugten Ausführungsform wird das Polyurethanprepolymer über eine Reaktion von mindestens einem Polyisocyanat und mindestens einem Polyetherpolyol und/oder mindestens einem Polyesterpolyol in einem stöchiometrischen Isocyanat-Gruppen Überschuss hergestellt.

Das hierbei gebildete Polyurethanprepolymer weist ein Molekulargewicht von vorzugsweise über 2000 g/mol, insbesondere eine solches zwischen 2000 und 50'000 g/mol, bevorzugt ein solches zwischen 4000 und 30'000 g/mol.

In einer zweiten Ausführungsform handelt es sich beim Prepolymer mit mindestens zwei feuchtigkeitsreaktiven Gruppen um ein Prepolymer mit mindestens zwei Alkoxysilangruppen. Es gibt mehrere unterschiedliche Möglichkeiten zu einem derartigen Prepolymer zu gelangen.

Einerseits können derartige Alkoxysilangruppen aufweisenden Prepolymere durch Hydrosilylierung eines Prepolymers mit endständigen Doppelbindungen erhalten wird. Beispielsweise geeignet sind silanfunktionelle Prepolymere, welche erhalten werden durch Polymerisation von Butadien, Isobutylen, Propylen, Butylen oder Mischungen davon, beziehungsweise durch Aufpfropfung von Polyoelfinen, und durch anschliessende Hydrosilylierung mit endständigen Doppelbindungen erhalten werden. Besonders geeignet sind silanfunktionelle Polyetherpolymere, wie sie bei der Hydrosilylierung von Polyetherpolymeren mit endständigen Doppelbindungen, insbesondere von allylterminierten Polyoxyalkylenpolymeren, wie beispielsweise in US 3,971,751 und US 6,207,766 beschrieben, erhalten werden.

Andererseits können derartige Alkoxysilangruppen aufweisenden Prepolymere erhalten werden durch die Umsetzung eines isocyanatfunktionellen Polyurethanprepolymers mit einem Silan, welches eine NCO-reaktive Gruppe aufweist, wobei das Silan in Bezug auf die Isocyanatgruppen des Polyurethanpolymers stöchiometrisch oder leicht überstöchiometrisch eingesetzt wird.

Als Silan mit NCO-reaktiven Gruppen weisen insbesondere die Formel (I) auf, 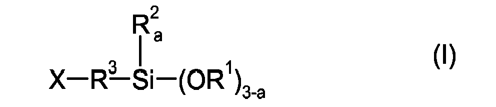 wobei R¹ für eine, gegebenenfalls substituierte, Alkyl-, Cycloalkyl-, Aryl- oder Arylalkylgruppe steht, welche gegebenenfalls Heteroatome enthalten kann, und welche weder mit Wasser oder Silan reaktive Gruppen noch Aminogruppen noch polymerisierbare Doppelbindungen enthält,
R² für eine Alkylgruppe mit 1 bis 8 C-Atomen, bevorzugt für eine Methyl- oder für eine Ethylgruppe, insbesondere eine Methylgruppe, steht,
R³ für eine lineare oder verzweigte, gegebenenfalls cyclische, Alkylengruppe mit 1 bis 20 C-Atomen, gegebenenfalls mit aromatischen Anteilen, und gegebenenfalls mit Heteroatomen, steht,
X für SH oder NH-R⁴ steht, wobei
R⁴ für H oder einen linearen oder verzweigten Kohlenwasserstoffrest mit 1 bis 20 C-Atomen, welcher gegebenenfalls cyclische Anteile aufweist, und welcher gegebenenfalls mindestens eine funktionelle Gruppe aufweist, welche ausgewählt ist aus der Gruppe umfassend Amin, Alkoxysilyl, Ether, Sulfon, Nitril, Nitro, Carbonsäureester, Sulfonsäureester und Phosphonsäureester;
a für 0, 1 oder 2, bevorzugt für 0 oder 1, steht.

Beispiele für geeignete Silan mit NCO-reaktiven Gruppen sind Aminosilane wie 3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, 7-Amino-4-oxaheptyl-dimethoxymethylsilan; sowie die Produkte aus der Michael-artigen Addition der hier genannten primären Aminosilane an Michaelakzeptoren wie Maleinsäurediester, Fumarsäurediester, Citraconsäurediester, Acrylsäureester, Methacrylsäureester, Zimtsäureester, Itaconsäurediester, Vinylphosphonsäurediester, Vinylsulfonsäurearylester, Vinylsulfone, Vinylnitrile, 1-Nitroethylene oder Knoevenagel-Kondensationsprodukte wie beispielsweise solche aus Malonsäurediestern und Aldehyden wie Formaldehyd, Acetaldehyd oder Benzaldehyd; sowie Bis(trimethoxysilylpropyl)amin N-(2-Aminoethyl)-3-aminopropyl-trimethoxysilan; sowie die Analoga der genannten Silan mit Ethoxy- anstelle der Methoxygruppen am Silicium; oder Mecaptosilane, wie 3-Mercaptopropyl-trimethoxysilan, 3-Mercaptopropyl-triethoxysilan sowie 3-Mercaptopropyl-methyldimethoxysilan.

Andererseits können derartige Alkoxysilangruppen aufweisenden Prepolymere erhalten werden durch die Umsetzung eines Hydroxylgruppen enthaltenden Prepolymere mit einem isocyanatfunktionellen Silan. Diese Umsetzung erfolgt im stöchiometrischen Verhältnis zwischen Isocyanatgruppen und Hydroxylgruppen, beispielsweise bei Temperaturen von 20 °C bis 100 °C, gegebenenfalls unter Mitverwendung von Katalysatoren.

Als isocyanatfunktionelle Silane geeignet sind Verbindungen der Formel (II), 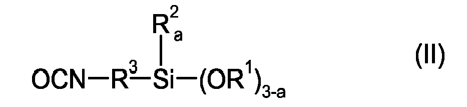 wobei R¹, R², R³ und a die gleichen Bedeutungen wie in Formel (I) aufweisen. Beispiele für geeignete Isocyanatosilane sind 3-Isocyanatopropyltrimethoxysilan, 3-Isocyanatopropyl-dimethoxymethylsilan, Isocyanatomethyltrimethoxysilan, Isocyanatomethyl-dimethoxymethylsilan, sowie deren Analoga mit Ethoxy- anstelle der Methoxygruppen am Silicium.

Als Hydroxylgruppen enthaltenden Prepolymere eignen sich neben den für die Polyurethanprepolymer genannten Polyole und den daraus mit Diisocyanaten im Überschuss des Polyols (insbesondere [OH]/[NCO] = 1.3 / 1 bis 4/1, bevorzugt [OH]/[NCO] = 1.8/1 bis 2.1/1) hergestellten OHterminierten Polyurethanprepolymeren insbesondere auch OH-funktionalisierten Homo- oder Copolymere von olefinischen Verbindungen, wie Butadien, Isopren, Isobutylene, Propylen, Butylen oder Ethylen.

In einer dritten Ausführungsform handelt es sich beim Prepolymer mit mindestens zwei feuchtigkeitsreaktiven Gruppen um ein Prepolymer, welches sowohl Alkoxysilan- als auch Isocyanatgruppen aufweist. Derartige Prepolymere sind beispielsweise durch die Umsetzung eines isocyanatfunktionellen Polyurethanprepolymers mit einem Silan, welches eine NCO-reaktive Gruppe aufweist, wobei dieses Silan in Bezug auf die Isocyanatgruppen des Polyurethanprepolymers unterstöchiometrisch eingesetzt wird.

Besonders bevorzugt als Prepolymer mit mindestens zwei feuchtigkeitsreaktiven Gruppen sind Polyurethanprepolymere mit mindestens zwei Isocyanat-Gruppen. Der bevorzugte zweikomponentige Heissschmelzklebstoff ist ein zweikomponentiger Polyurethanklebstoff.

Je nach Bedürfnissen kann die Hauptkomponente A weiterhin gegebenenfalls nicht reaktive thermoplastische Materialien enthalten, wie beispielsweise Homo- oder Copolymere von ungesättigten Monomeren, insbesondere ausgewählt aus der Gruppe umfassend Ethylen, Propylen, (Meth)acrylsäure und deren Ester, Vinylester und Vinylalkohol. Insbesondere eignen sich hierfür Copolymere Ethylenvinylacetat (EVA) sowie ataktische ataktische Poly-α-olefine(APAO), Polypropylen (PP) oder Polyethylen (PE). Die Hauptkomponente A kann weitere Füllstoffe umfassen. Als Füllstoffe sind Russ und Kreiden bevorzugt.

Die Nebenkomponente B des zu applizierenden Kleb- oder Dichtstoffs umfasst mindestens Wasser. Um eine gute Einarbeitung des Wassers in die Hauptkomponente A zu erhalten, ist es vorteilhaft, wenn die Nebenkomponente B ein Trägermittel enthält, das die Viskosität der Nebenkomponente B erhöht. Das Trägermaterial ist vorteilhaft ein organisches Polymer mit ionischen Gruppen. Derartige ionische Gruppen sind insbesondere Carbonsäure-Gruppe und/oder Sulfonsäure-Gruppen. Einerseits vorteilhaft als derartige organische Polymere sind Poly(meth)acrylsäuren sowie Copolymeren von (Meth)acrylsäuren. Besonders vorteilhaft ist das Trägermaterial ein Polyurethan mit mindestens einer Carbonsäure-Gruppe und/oder Sulfonsäure-Gruppe. Als besonders geeignet als Trägermaterialien haben sich Polyurethane, zu deren Synthese Carbonsäuregruppen enthaltende Diole, insbesondere Dimethylolpropancarbonsäure, sowie Polyisocyanate verwendet werden. Unter Verwendung derartiger Trägermaterialien wird das Wasser durch das Trägermaterial mit ionischen Gruppen reversibel gebunden und bildet eine gelartige Paste.

Die Menge von Wasser in Bezug auf die feuchtigkeitsreaktiven Gruppen kann von unterstöchiometrisch bis überstöchiometrisch sein, insbesondere geeignet ist ein Verhältnis der reaktiven Gruppen [H₂O]/[NCO] oder [H₂O]/[an Silizium gebundenes Alkoxy] von über 2 bis 5, insbesondere von 2 bis 4. Bevorzugt wird überstöchiometrisch, insbesondere mit einem Verhältnis von 2 bis 3.

Weiterhin kann die Nebenkomponente zusätzliche Verbindungen mit mindestens zwei NCO-reaktiven Gruppen umfassen. Insbesondere handelt es sich hierbei um Polyamine oder Polyole

Es bestehen weitere Möglichkeiten eine Wasserpaste zu formulieren. Hierbei wird Wasser mit feinen Füllstoffen wie pyrogener Kieselsäure, wie beispielsweise Aerosil®, erhältlich von Degussa, oder Kreide oder Molekularsiebe vermischt. Hierbei wird durch das Wasser an den Oberflächen oder in den Poren der Füllstoff reversibel gebunden.

Bevorzugt als Trägermittel sind jedoch Wasserpaste sind organische Polymere mit ionischen Gruppen.

Wasserpasten mit organischen Polymeren, welche ionische Gruppen enthalten und für den Einsatz gemäss vorliegender Erfindung als Nebenkomponente B eingesetzt werden können, sind grundsätzlich bereits bekannt und werden beispielsweise Sikaflex®-254 oder SikaTack®-Plus, welche einkomponentige Warmmelt-Polyurethanklebstoff sind, im Sikaflex®-254 Booster System oder SikaTack®-Plus Booster System beigemischt.

Als weitere Bestandteile der Hauptkomponente A und/oder der Nebenkomponente B sind die dem Fachmann hierfür bekannten Zusätze wie Weichmacher, Füllstoffe, Haftvermittler, UV-Absorptionsmittel, UV- oder und Wärmestabilisatoren, Antioxidantien, Flammschutzmittel, optische Aufheller, Katalysatoren, Farbpigmente oder Farbstoffe, möglich.

Als Katalysatoren sind für Isocyanat-Gruppen aufweisende Prepolymere insbesondere Amine oder organische Metallverbindungen der Metalle Zinn, Zink oder Bismut geeignet. Als organische Metallverbindungen sind insbesondere Dibutylzinndilaurat (DBTL) bevorzugt.

Falls der Kleb- oder Dichtstoff Alkoxysilan-Gruppen aufweisende Prepolymere aufweist, sind Katalysatoren, welche die Hydrolyse und/oder Vernetzung von Alkoxysilan-Gruppen katalysieren, geeignet. Solche Katalysatoren umfassen beispielsweise Titanate.

Die Komponenten A und B liegen bei der Applikation vorzugsweise in einem Volumenverhältnis A zu B von 200 bis 10, insbesondere von 150 bis 20, bevorzugt 100 bis 30 vor. Das heisst, dass beispielsweise im Querschnitt eines zwischen zwei Substrate applizierten Kleb- oder Dichtstoffs AB und einer Fläche der Komponente A von 4x10 mm, der Durchmesser der Komponente B von 0.5 bis 2.3 mm, insbesondere von 0.6 bis 1.6 mm, bevorzugt von 0.7 bis 1.3 mm, besonders bevorzugt etwa 1 mm beträgt.

Die Hauptkomponente A und die Nebenkomponente B werden aus Vorratsbehältern vorzugsweise mit Hilfe einer Pumpe oder Handpresse in die Zuleitung beziehungsweise die Rohrleitung der Applikationsapparatur befördert. Als Vorratsbehälter können beispielsweise Kartuschen, Hobbocks oder Fässer verwendet werden. Eine Applikationsapparatur umfassend Gehäuse, Zuleitung, Rohrleitung und Applikationsdüse zur Durchführung des erfindungsgemässen Verfahrens wird vorteilhaft auf einen Kartuschenausgang oder auf eine Auslassöffnung einer Klebstoffpumpe aufgebracht, vorzugsweise aufgeschraubt.

Nach dem erfindungsgemässen Verfahren wird der Kleb- oder Dichtstoffstrom AB in einem weiteren Schritt mit mindestens einer Oberfläche mindestens eines Substrats kontaktiert.

In einer Ausführungsform wird die Hauptkomponente A bei Raumtemperatur appliziert. In einer weiteren Ausführungsform wird die Hauptkomponente A zur Applikation auf erhöhte Temperatur, d.h. bis ca. 60-65°C erwärmt, oder auf Temperaturen von typischerweise 80-85°C erhitzt. Der Kleb- oder Dichtstoff kann somit ein bei Raumtemperatur härtender Kleb- oder Dichtstoff oder ein sogenannter "warmmelt" oder ein Heissklebstoff (hotmelt) sein.

Das mindestens eine Substrat kann eine Vielzahl von Materialien darstellen. Insbesondere eignen sich Kunststoffe, organische Materialien wie Leder, Stoffe, Papier, Holz, Harz gebundene Holzwerkstoffe, Harz-Texil-Compositewerkstoffe, Glas, Porzellan, Keramik sowie Metalle, insbesondere lackierte Metalle.

Als Kunststoffe eignen sich insbesondere Polyvinylchlorid (PVC), Acrylonitril-Butadien-Styrol-Copolymere (ABS), SMC (Sheet Molding Composites), Polycarbonat (PC), Polyamid (PA), Polyester (PE), Polyoxymethylen (POM), Polyolefine, insbesondere Polyethylen (PE) oder Polypropylen (PP), bevorzugt mit Plasma, Corona oder Flammen oberflächenbehandeltes PP oder PE.

Vorzugsweise ist mindestens ein Substrat eine Scheibe, vorzugsweise aus Glas und mindestens ein weiteres Substrat aus Glas, Holz, Lack, oder Kunststoff, insbesondere Polyvinylchlorid (PVC). Somit kann das erfindungsgemässe Verfahren vorzugsweise im Tür- oder Fensterbau, wo Glas mit einem Rahmen aus Holz oder Kunststoff verklebt wird, oder im Fahrzeugbau, wo Glas mit einer mit Lack beschichteten Karosserie verklebt wird, eingesetzt werden.

Unter "Scheibe" wird in der gesamten vorliegenden Anmeldung eine flache oder gekrümmte Platte aus Glas oder einem im wesentlichen durchsichtigen Kunststoff verstanden. Es kann sich hier um einschichtige oder mehrschichtige Platten handeln, insbesondere auch Scheiben mit Folien zwischen den Glasplatten, wie sie als Sicherheitsglasscheiben im Automobilbau zum Beispiel für die Windschutzscheibe zu Einsatz kommen oder um Scheiben mit einer Keramikbeschichtung, vorzugsweise Glasscheiben mit Keramikbeschichtung. Bevorzugt sind Scheiben aus mehrschichtigen Platten wie Isolierglasscheiben, insbesondere Doppelt- und Mehrfach-Isolierglasscheiben, wie sie im Fenster- und Türbau üblich sind.

Die erfindungsgemäss applizierten Kleb- oder Dichtstoffe eignen sich insbesondere als Montageklebstoffe. Als ein "Montageklebstoff" wird in diesem Dokument ein Klebstoff bezeichnet, welcher einen schnellen Festigkeitsaufbau besitzt, so dass er dazu geeignet ist, Teile zu verkleben, welche nach kurzer Zeit nach der Klebstoffapplikation bereits bewegt werden müssen. Der Klebstoff muss deshalb in der Lage sein, nach kurzer Zeit bereits Kräfte zwischen den Fügepartnern zu übertragen. Typischerweise werden Montageklebstoffe in der industriellen Fertigung verwendet, insbesondere in einem Fliessband-Prozess. Besonders bevorzugt ist die Verwendung des Klebstoffs in Bau von Transportmittel, insbesondere von Fahrzeugen, besonders bevorzugt von Automobilen.

So können beispielsweise vorfabrizierte Module an eine Karosserie eines Fahrzeugs mit dem erfindungsgemäss applizierten Klebstoff angeklebt werden.

Als eine besonders bevorzugte Anwendung gilt die Anwendung als Montageklebstoff für das dickschichtige Verkleben von feuchtigkeitsundurchlässigen Materialien.

Dieses Verfahren eignet sich insbesondere für das Erstellen von dicken Verklebungen, insbesondere dicker als 1 mm, bevorzugt mehr als 5 mm. Bei diesen Schichtdicken härten konventionelle Klebstoffe extrem langsam, wenn überhaupt, aus, da die Aushärtung durch die Diffusion der Luftfeuchtigkeit durch den Klebstoff kontrolliert wird. Diese Diffusion wird durch das Ausbilden einer Haut von ausgehärtetem Klebstoff am Rand der Verklebung weiter reduziert, so dass der unreagierte Klebstoff im Kern noch langsamer aushärtet.

Für die Mechanik eines verklebten Verbundkörpers ist jedoch auch der Kern der Klebschicht massgebend. Die Diffusionsproblematik wird weiterhin noch verstärkt, wenn feuchtigkeitsundurchlässige Materialen, insbesondere flächig, verklebt werden. Denn hier kann die Luftfeuchtigkeit lediglich über die Seitenkante der Verklebung, wo der Klebstoff nicht von diesem Material bedeckt ist, in das Innere des Klebstoffs eindiffundieren. Aufgrund der hierbei auftretenden Wegstrecken härten derartige Verklebungen nur nach extrem langen Zeiten vollständig aus.

Somit gilt als eine weitere besonders bevorzugte Anwendung das Verkleben von Teilen, bei dessen Verbund nach dem Fügen die Klebstoffschicht eine kleine Oberfläche aufweist, welche in direktem Kontakt zur Umgebungsluft und damit zur Luftfeuchtigkeit besteht.

Eine weitere bevorzugte Anwendung ist die Herstellung von Sandwich-Panels. So werden beispielsweise Polymerplatten, insbesondere Polymerschaumplatten, mit Platten, insbesondere mit Metallbleche, grossflächig, typischerweise beidseitig, verklebt. Derartige Sandwich-Panels werden insbesondere zur Strukturverstärkung oder zur Isolation gegen Wärme oder Kälte verwendet und kommen insbesondere im Bau von Lager- oder Transport-Containern oder im Fahrzeugbau, insbesondere im Lastkraftwagenbau oder Bahnwaggonbau oder Schiffsbau, zur Anwendung.

Bei den erfindungsgemässen Klebstoffen sind derartige durch Diffusion bedingte Schwierigkeiten nicht mehr vorhanden. Und somit eigenen sich die erfindungsgemässen Klebstoffe insbesondere für Verklebungen mit grossen Schichtdicken oder grossflächigen Verklebungen sowie für das Verkleben von feuchtigkeitsundurchlässigen Materialien.

Mittels der erfindungsgemässen Klebstoffe lassen sich höhere Anfangsfestigkeiten als mit bekannten Klebstoffen erreichen. Somit sind die Zeiten zwischen Klebstoffapplikation und Handhabung der verklebten Substrate, d.h. der Verbundkörper, stark verkürzt, was sich in einer kürzeren Taktzeit in einer industriellen Anwendung äussert und andererseits sind die Endfestigkeiten im Vergleich zu einkomponentigen Heissschmelzklebstoffen bedeutend schneller erreicht.

Eine hohe Frühfestigkeit, beziehungsweise ein hoher Wärmestand nach sehr kurzer Zeit nach Applikation ist jedoch eine vermehrte Forderung für industrielle Applikationen, insbesondere als Montageklebstoffe.

Durch die Unabhängigkeit von der Diffusion der Luftfeuchtigkeit aus der Umgebung in den Klebstoff ist der nach dem erfindungsgemässen Verfahren applizierte Klebstoff somit unabhängig von der relativen Luftfeuchtigkeit der Umgebungsluft. Es hat sich nämlich gezeigt, dass bei den erfindungsgemäss applizierten Kleb- oder Dichtstoffen, im Gegensatz zu den herkömmlich applizierten feuchtigkeitshärtenden Klebstoffen, die Anfangsfestigkeit durch die geringe Luftfeuchtigkeit, wie sie typischerweise im Winter vorkommen, nicht negativ beeinflusst wird.

Vor dem Applizieren eines Kleb- oder Dichtstoffs nach einem erfindungsgemässen Verfahren auf eine Substratoberfläche kann es von Vorteil sein, dass die Oberfläche des mindestens einen Substrats vor dem Verkleben vorbehandelt wird. Dies kann neben einer Plasmabehandlung, insbesondere eine Luftplasma-Vorbehandlung bei atmosphärischen Umgebungsdruck, ein Aufbringen eines Primers oder einer Haftvermittlerzusammensetzung und/oder ein mechanisches Reinigen sein. Als Primer können zum Beispiel Silan- und/oder Titanat-Verbindungen enthaltende Zusammensetzungen verwendet werden. Solche Primer sind grundsätzlich bereits bekannt und werden beispielsweise von Sika® z.B. unter dem Namen Sika® Primer vertrieben.

In einem weiteren Aspekt betrifft die vorliegende Erfindung ein auf mindestens eine Substratoberfläche applizierter Kleb- oder Dichtstoff, welcher nach einem vorgängig beschriebenen Verfahren zur Applikation appliziert ist. Der Kleb- oder Dichtstoff ist vorzugsweise ausgehärtet. Der erfindungsgemässe auf mindestens eine Substratoberfläche applizierte Kleb- oder Dichtstoff wird vorzugsweise zur Verklebung und/oder Abdichtung von mindestens zwei Substratoberflächen verwendet. Der Kleb- oder Dichtstoff liegt vorzugsweise als Klebstoffraupe oder Dichtstofffuge vor.

Des weiteren betrifft die Erfindung ein Verfahren zum Verkleben und/oder Abdichten von mindestens zwei Substratoberflächen umfassend die Schritte: (i) Applizieren eines Kleb- oder Dichtstoffes nach dem erfindungsgemässen Applikationsverfahren auf mindestens eine Substratoberfläche und Kontaktieren des applizierten Kleb- oder Dichtstoffs mit einer weiteren Substratoberfläche; oder Applizieren eines Kleb- oder Dichtstoffes nach dem erfindungsgemässen Applikationsverfahren zwischen mindestens zwei Substratoberflächen; und (ii) Aushärten des applizierten Kleb- oder Dichtstoffes.

In einer bevorzugten Ausführungsform liegt der nach einem erfindungsgemässen Verfahren auf mindestens eine Substratoberfläche applizierte Kleb- oder Dichtstoff in einer Mehrfachisolierglasscheibe vor. Die Erfindung betrifft daher eine Mehrfachisolierglasscheibe umfassend mindestens zwei Scheiben, mindestens einen erfindungsgemässen auf mindestens eine Substratoberfläche applizierten Kleb- oder Dichtstoff, und mindestens einen Abstandhalter, wobei die mindestens zwei Scheiben über den Abstandhalter in Kontakt sind und der Kleb- oder Dichtstoff zwischen den mindestens zwei Scheiben angeordnet ist, dadurch gekennzeichnet, dass der Kleb- oder Dichtstoff nach dem erfindungsgemässen Verfahren appliziert worden ist, und der Kleb- oder Dichtstoff mit den mindestens zwei Glasscheiben in Kontakt ist.

In einer weiteren Ausführungsform betrifft die Erfindung eine Mehrfachisolierglasscheibe umfassend zusätzlich mindestens eine Butylschicht, d.h. eine Schicht aus Butylkautschuk, wobei die mindestens zwei Scheiben durch den Abstandhalter über die mindestens eine Butylschicht in Kontakt sind.

Der Abstandhalter ist aus einem starren Material, vorzugsweise aus einem Metall oder Kunststoff. Besonders bevorzugt ist Aluminium. Sind die mindestens zwei Scheiben direkt über den Abstandhalter miteinander verbunden, ist es vorteilhaft, wenn der Abstandhalter aus einem Material ist, der an den Scheiben haftet und zusätzlich diffusionsdicht ist.

Zur Applikation des Kleb- oder Dichtstoffs in die Fuge zwischen den zwei Scheiben und dem Abstandhalter wird bevorzugt eine Applikationsapparatur mit einer Applikationsdüse verwendet, deren Durchmesser etwa dem Abstand der zwei Scheiben entspricht. Die mindestens eine Oberfläche eines Substrats, auf die der Kleb- oder Dichtstoff appliziert wird, ist vorzugsweise die Oberfläche des Abstandhalters. Der Kleb- oder Dichtstoff dient vorzugsweise der Abdichtung, und füllt die Fuge zwischen den mindestens zwei Scheiben und dem Abstandhalter aus. Es ist selbstverständlich, dass der Kleb- oder Dichtstoff in dieser Anordnung auch als Klebstoff fungiert.

Es ist vorteilhaft, wenn im Querschnitt der Mehrfachisolierglasscheibe und somit im Querschnitt des Kleb- oder Dichtstoffstroms AB zu dessen Applikationsrichtung der Massenmittelpunkt des Hauptkomponentenstroms A im Bereich des Massenmittelpunktes des mindestens einen Nebenkomponentenstroms B vorliegt. Besonders vorteilhaft ist es, wenn im Querschnitt des Kleb- oder Dichtstoffstroms AB zu dessen Applikationsrichtung der Massenmittelpunkt des mindestens einen Nebenkomponentenstroms B zwischen dem Massenmittelpunkt des Hauptkomponentenstroms A und der mindestens einen Substratoberfläche, d.h. dem Abstandhalter vorliegt. Dies bringt den Vorteil, dass der Kleb- oder Dichtstoffstrom AB auch auf der nicht der Luft sondern dem Abstandhalter zugewandten Seite schnell und komplett aushärtet ohne dass Blasen gebildet werden.

Werden zwei Scheiben miteinander verklebt, befindet sich die Verklebung bevorzugt im Randbereich der Scheibe. Es sind jedoch auch Verklebungen möglich, die sich nicht im Randbereich befinden. Ein Beispiel für eine solche Anwendung wäre das Verkleben von sehr grossen Scheiben, bei denen aus Stabilitätsgründen die Scheibe durch verklebte Quersprossen verstärkt wird. Vorzugsweise ist die Mehrfachisolierglasscheibe am Rand durchgehend mit einem Kleb- oder Dichtstoff versehen, welcher für Wasser und Dampf diffusionsdicht ist, damit im Inneren der mindestens zwei Scheiben ein Vakuum aufgebaut werden kann.

In einem weiteren Aspekt betrifft die vorliegende Erfindung ein Fenster oder eine Türe, dadurch gekennzeichnet, dass das Fenster oder die Türe mindestens eine erfindungsgemässe Mehrfachisolierglasscheibe umfasst, welche mit einem Rahmen verbunden, vorzugsweise verklebt ist.

Unter "Rahmen" wird in der gesamten vorliegenden Anmeldung der Körper, auf welchen ein erstes Substrat, vorzugsweise eine Scheibe aus Glas geklebt wird, verstanden. Dieser Körper kann eine Struktur oder eine Teilstruktur eines Bauwerkes oder eines Fahrzeuges darstellen. Als Beispiel für eine Teilstruktur eines Fahrzeugs sei ein Scheinwerfergehäuse genannt. Der Rahmen kann weiterhin Scharniere oder ähnliche Verbindungselemente aufweisen, die ein Aufklappen oder Öffnen in Bezug auf die restliche Trägerstruktur erlauben. Flügel-Fenster und -Türen oder Klappfenster sind Beispiele für diese Ausführungsform der Erfindung. Der Rahmen kann grundsätzlich aus einem beliebigem Material aufgebaut sein. In den bevorzugten Ausführungsformen ist der Rahmen im Wesentlichen aus Holz oder lackiertem Holz aufgebaut.

Die Mehrfachisolierglasscheibe wird über einen Klebstoff mit einem Rahmen eines Fensters oder einer Türe verbunden. In einer Ausführungsform wird der Klebstoff in einen Hohlraum zwischen Mehrfachisolierglasscheibe und Rahmen nach einem üblichen Verfahren eingepresst. Der Hohlraum verläuft vorzugsweise im Aussenbereich der Mehrfachisolierglasscheibe herum, so dass die gesamte Scheibe mit einer rundum laufenden Klebstoffschicht verklebt und abgedichtet ist. Der Hohlraum für die Klebstoffaufnahme ist neben dem Rahmen und der Scheibe durch eine Abdichtung, vorzugsweise eine Dichtungslippe begrenzt.

In einer anderen Ausführungsform wird zuerst der Klebstoff auf eine Seite der Mehrfachisolierglasscheibe appliziert und ein erster Teil des Rahmens auf den Klebstoff appliziert, und danach wird auf die zweite Seite der Mehrfachisolierglasscheibe Klebstoff appliziert und darauf ein zweiter Teil des Rahmens appliziert und die beiden Rahmenteile miteinander verbunden. Der Übergang zwischen Scheibe, Klebstoff und Rahmen wird mit einer Abdichtung, vorzugsweise einer Dichtungslippe, versehen.

Die Dichtungslippe ist vorzugsweise aus einem elastischen Material gefertigt. Bevorzugte Materialien hierfür sind Gummi, EPDM oder TPE. Die Form der Dichtungslippe ist vorteilhaft derart, dass im Querschnitt zur Scheibe und zur Verklebung die mindestens eine Dichtungslippe eine konkave Form in Richtung der Umgebungsluft aufweist. Dies bewirkt, dass zumindest die, möglichen Umwelteinflüssen ausgesetzte, äussere Seite der Dichtungslippen eine zusätzliche Schutzfunktion übernimmt, indem beispielsweise Regen- oder Kondenswasser nicht zwischen Dichtungslippe und Glas, beziehungsweise in den mit Klebstoff gefüllten Hohlraum eindringen kann. Es ist selbstverständlich, dass diese bevorzugte Abdichtfunktion gegenüber von aussen stammenden Medien auch mittels einer separat angeordneten Dichtungslippe oder einer Abdeckungsleiste oder eines anderen Dichtungsmittels erfolgen kann.

Die Dichtungslippen sind vorteilhaft mit dem Rahmen verklebt oder durch in Nuten eingreifende Befestigungselemente verbunden. Diese Befestigungselemente können mit der Dichtungslippe verbunden sein oder aber einen integrierten Teil der Dichtungslippe darstellen.

Als Klebstoff zur Verklebung einer Mehrfachisolierglasscheibe mit einem Rahmen ist grundsätzlich jeder Klebstoff geeignet, welcher genügend gute Fliesseigenschaften aufweist, um unter Druck in eine Hohlraum eingepresst werden zu können, und welcher eine Topfzeit besitzt, die einerseits mindestens so lang ist, dass der Klebstoff den gesamten Hohlraum, welcher begrenzt ist durch Scheibe, Dichtungslippe und gegebenenfalls Rahmen, ausfüllen kann und die andererseits so kurz ist, damit die Vernetzung, und damit der Festigkeitsaufbau, des Klebstoffes möglichst schnell erfolgen kann. Dies hat zur Folge, dass der verklebte Artikel möglichst schnell nach der Verklebung gehandhabt werden kann. Es wurde gefunden, dass je nach Grösse der Scheibe und Anzahl der Einpressöffnungen eine für die industrielle Verklebung von Scheiben optimale Topfzeit zwischen 1 und 20 Minuten, insbesondere zwischen 1 und 10 Minuten, bevorzugt zwischen 1 und 5 Minuten, beträgt. So sind beispielsweise 2-komponentige Klebstoffe auf Basis von Epoxiden, Polyisocyanaten oder (Meth)acrylaten geeignete Klebstoffe. Ein schnelle Härtung der Klebstoffe ist auch durch Einwirkung von Wärme oder Licht möglich. Als besonders geeignet haben sich solche 2-komponentige Klebstoffe, welche mindestens ein (Meth)acrylat enthalten und durch Radikale, vorzugsweise aus Peroxiden stammend, bei Raumtemperatur gehärtet werden können. Ein wesentlicher Faktor in der Auswahl des Klebstoffes ist die gute Haftung auf Scheibe, Dichtungslippe und gegebenenfalls Rahmen. Ein weiterer Gesichtspunkt bei der Auswahl des Klebstoffes ist dessen UV-Stabilität. Der Klebstoff ist UV-Strahlung exponiert, welche durch die Scheibe auf die Verklebung gelangen kann. Deshalb ist bei einem UV-instabilen Klebstoff entweder eine genügende grosse Überdeckung durch den Rahmen oder einer Abdeckleiste oder die Verwendung einer Keramikbeschichtung notwendig. Bei Verwendung eines UV-stabilen Klebstoffes hingegen kann deshalb, auch in Abwesenheit einer Überdeckung, eine Scheibe ohne Glaskeramikschicht verwendet werden. Somit ist eine Verklebung direkt auf die Scheibe ohne Anwesenheit einer Beschichtung ermöglicht. Aufgrund der unterschiedlichen Materialien und deren Ausdehnungseigenschaften in Bezug auf Wärme und Feuchtigkeit ist ein starrer Klebstoff nicht geeignet. Der Klebstoff muss deshalb auch über ein gewisses Mass an Elastizität verfügen, um die, durch Umwelteinflüsse entstehenden, Spannungen aufnehmen zu können. Der Klebstoff zur Verklebung einer Mehrfachisolierglasscheibe mit einem Fenster- oder Türrahmen kann der gleiche Klebstoff wie die Hauptkomponente A oder ein von der Hauptkomponente A verschiedener Klebstoff sein.

### Kurze Beschreibung der Zeichnung

Im folgenden werden anhand der Zeichnungen Ausführungsbeispiele der Erfindung näher erläutert. Gleiche Elemente sind in den verschiedenen Figuren mit den gleichen Bezugszeichen versehen. Die Strömungsrichtung der Medien sowie die Applikationsrichtung ist mit Pfeilen angegeben.

### Es zeigen:

- Fig. 1A: Schematische Darstellung eines Teillängsschnitts einer Applikationsapparatur und Klebstoffraupe längs zur Applikationsrichtung;
- Fig. 1B: Schematische Darstellung eines Querschnitts durch die Applikationsapparatur aus Fig. 1A entlang der Linie C-C;
- Fig. 1C: Schematische Darstellung eines Querschnitts durch den applizierten Kleb- oder Dichtstoff aus Fig. 1A entlang der Linie D-D;
- Fig. 1D: Schematische Darstellung eines Teillängsschnitts einer Ausführungsform einer Applikationsapparatur mit mehr als einem Nebenkomponentenstrom quer zur Applikationsrichtung;
- Fig. 1E: Schematische Darstellung eines Querschnitts durch die Applikationsapparatur aus Fig. 1 D entlang der Linie C-C;
- Fig. 1 F: Schematische Darstellung eines Querschnitts durch den mit einer Applikationsapparatur aus Fig. 1D applizierten Kleb- oder Dichtstoff;
- Fig. 2A: Schematische Darstellung eines Querschnitts durch eine Düse mit einer ovalen Öffnung;
- Fig. 2B: Schematische Darstellung eines Querschnitts durch eine Düse mit vier ovalen Öffnungen;
- Fig. 2C: Schematische Darstellung eines Querschnitts durch eine Düse mit drei runden Öffnungen;
- Fig. 2D: Schematische Darstellung eines Querschnitts durch eine Rohrleitung mit runder Öffnung;
- Fig. 2E: Schematische Darstellung eines Querschnitts durch eine Rohrleitung mit ovaler Öffnung;
- Fig. 2F: Schematische Darstellung eines Querschnitts durch eine Rohrleitung mit dreieckiger Öffnung;
- Fig. 3A: Schematische Darstellung eines Querschnitts durch einen zwischen zwei Substraten applizierten Kleb- oder Dichtstoff mit einem Nebenkomponentenstrom;
- Fig. 3B: Schematische Darstellung eines Querschnitts durch einen zwischen zwei Substraten applizierten Kleb- oder Dichtstoff mit drei Nebenkomponentenströme;
- Fig. 4A: Schematische Darstellung eines Querschnitts durch eine Mehrfachisolierglasscheibe;
- Fig. 4B: Schematische Darstellung eines Teilquerschnitts durch die Verklebung eines Fenster- oder Türrahmens mit einer Mehrfachisolierglasscheibe.

Es sind nur die für das unmittelbare Verständnis der Erfindung wesentlichen Elemente gezeigt.

### Weg zur Ausführung der Erfindung

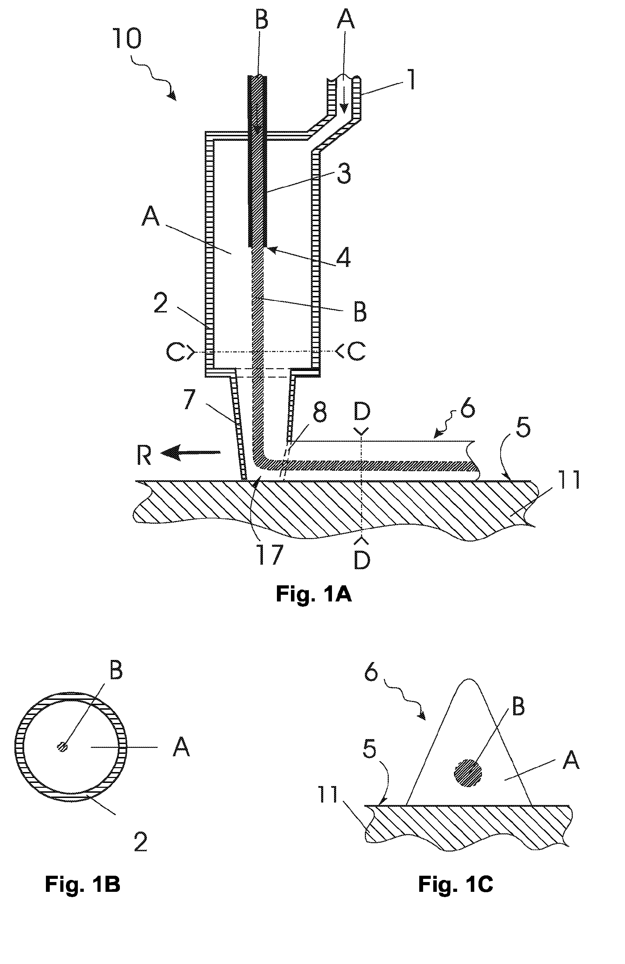

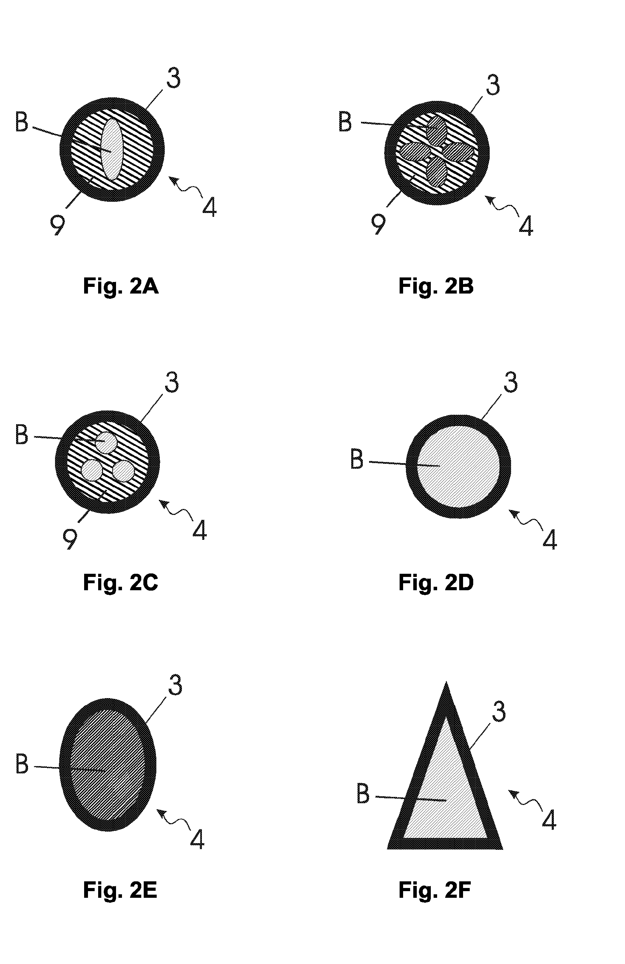

Figur 1A zeigt in schematischer Darstellung ein Teil einer möglichen Applikationsapparatur 10, mit welcher das erfindungsgemässe Verfahren zur Applikation eines Kleb- oder Dichtstoffes 6 auf mindestens eine erste Substratoberfläche 5 eines ersten Substrats 11 durchgeführt werden kann. Beim erfindungsgemässen Verfahren wird in einem ersten Schritt über eine Zuleitung 1 ein Hauptkomponentenstrom A einer Zusammensetzung umfassend mindestens ein Prepolymer mit mindestens zwei feuchtigkeitsreaktiven Gruppen in ein Gehäuse 2 eingeführt, und mindestens ein Nebenkomponentenstrom B umfassend Wasser wird über mindestens eine Rohrleitung 3 durch eine Öffnung 4 ins Innere des Hauptkomponentenstroms A eingebracht unter Bildung eines Kleb- oder Dichtstoffstroms AB, bei welchem die Nebenkomponente B vollständig von der Hauptkomponente A ummantelt ist. Die Pfeile in der Rohrleitung 3 und der Zuleitung 1 zeigen die Strömungsrichtung der Komponenten. Nach dem Austritt des Nebenkomponentenstroms B aus der Rohrleitung 3 in den Hauptkomponentenstrom A verläuft die Strömungsrichtung der beiden Komponenten im wesentlichen parallel zueinander in Längsrichtung der Applikationsapparatur 10. Das vorliegende Beispiel zeigt eine Rohrleitung 3 mit einer runden Öffnung 4 ohne Düse, wie sie in Figur 2D gezeigt ist. Die Applikationsapparatur 10 weist eine Applikationsdüse 7 mit einer Öffnung 17 und vorzugsweise mit einem Ausschnitt 8 auf, durch welche der Kleb- oder Dichtstoffstrom AB auf eine Substratoberfläche 5 eines ersten Substrats 11, vorzugsweise Glas, aufgebracht wird. Vorzugsweise ist der Ausschnitt ein dreieckiger Ausschnitt 8, welcher von der Öffnung 17 der Applikationsdüsenspitze her entgegen der Strömungsrichtung spitz zuläuft. Wird die Applikationsapparatur 10 beispielsweise mit der Applikationsdüse 7 mit einem dreieckigen Ausschnitt 8 im wesentlichen senkrecht zu einer Applikationsfläche oder einer Substratoberfläche 5 ausgerichtet und entlang deren Oberfläche in einer dem Ausschnitt 8 entgegengesetzte Richtung R, dargestellt mit einem Pfeil, bewegt, so lässt sich eine Klebstoffraupe 6 mit dreieckigen Querschnitt applizieren, wie in Figur 1C dargestellt.

Figur 1B zeigt einen Schnitt entlang der Linie C-C in Figur 1A. Im Inneren des Gehäuses 2 liegt ein Kleb- oder Dichtstoffstrom AB vor mit dem Hauptkomponentenstrom A und dem Nebenkomponentenstrom B.

Figur 1C zeigt einen Schnitt entlang der Linie D-D in Figur 1A. Es ist eine dreieckige Kleb- oder Dichtstoffraupe 6 dargestellt, die auf einer Substratoberfläche 5 eines Substrats 11 appliziert wurde. Die Kleb- oder Dichtstoffraupe 6 weist eine Hauptkomponente A und eine Nebenkomponente B auf, wobei der Massenmittelpunkt der Nebenkomponente B zwischen dem Massenmittelpunkt der Hauptkomponente A und der Substratoberfläche 5 vorliegt.

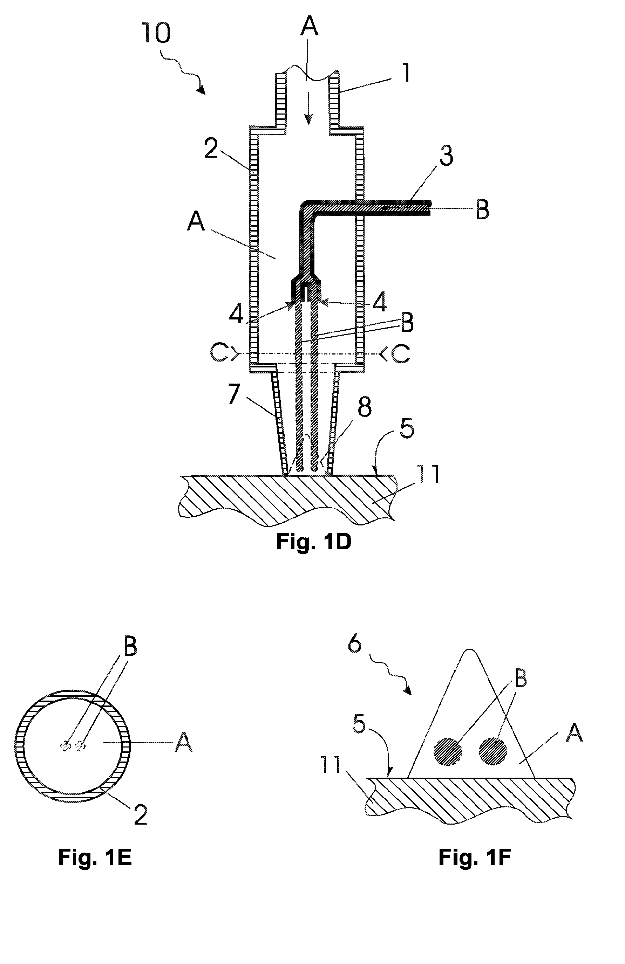

Figur 1D zeigt eine schematische Darstellung eines Längsschnitts durch eine Applikationsapparatur 10 quer zur Applikationsrichtung. Figur 1D stellt eine andere Ausführung der Applikationsapparatur 10, wie sie in Figur 1A beschrieben wird, dar. Die Rohrleitung 3 tritt seitlich in das Gehäuse 2 ein und verzweigt sich gegen die Öffnung 4 hin, so dass bei der Öffnung 4 der Rohrleitung 3 zwei Rohrleitungen vorliegen unter Bildung von zwei Nebenkomponentenströme B im Inneren des Hauptkomponentenstroms A.

Figur 1E zeigt einen Schnitt entlang der Linie C-C in Figur 1D. Im Inneren des Gehäuses 2 liegt ein Kleb- oder Dichtstoffstrom AB vor mit dem Hauptkomponentenstrom A und zwei Nebenkomponentenströme B.

Figur 1F zeigt einen Querschnitt durch eine mit der Applikationsapparatur 10 aus Figur 1 D applizierte Klebstoffraupe 6. Es ist eine dreieckige Kleb- oder Dichtstoffraupe 6 dargestellt, die auf einer Substratoberfläche 5 eines Substrats 11 appliziert wurde. Die Kleb- oder Dichtstoffraupe 6 weist eine Hauptkomponente A und zwei Nebenkomponentenströme B auf, wobei der Massenmittelpunkt der Nebenkomponentenströme B zwischen dem Massenmittelpunkt der Hauptkomponente A und der Substratoberfläche 5 vorliegt.

Figur 2A zeigt einen Querschnitt durch eine Öffnung 4 einer Rohrleitung 3, welche eine Düse 9 mit einer ovalen Öffnung aufweist, so dass ein Nebenkomponentenstrom B mit einer im wesentlichen ovalen Form im Querschnitt gebildet wird.

Figur 2B zeigt einen Querschnitt durch eine Öffnung 4 einer Rohrleitung 3, welche eine Düse 9 mit vier ovalen Öffnungen aufweist, so dass vier Nebenkomponentenströme B mit einer im wesentlichen ovalen Form im Querschnitt gebildet werden.

Figur 2C zeigt einen Querschnitt durch eine Öffnung 4 einer Rohrleitung 3, welche eine Düse 9 mit drei runden Öffnungen aufweist, so dass drei Nebenkomponentenströme B mit einer im wesentlichen runden Form im Querschnitt gebildet werden.

Figur 2D zeigt einen Querschnitt durch eine Öffnung 4 einer Rohrleitung 3 ohne Düse, welche eine runde Öffnung aufweist, so dass ein Nebenkomponentenstrom B mit einer im wesentlichen runden Form gebildet wird.

Figur 2E zeigt einen Querschnitt durch eine Öffnung 4 einer Rohrleitung 3, welche eine ovalen Öffnung aufweist, so dass ein Nebenkomponentenstrom B mit einer im wesentlichen ovalen Form gebildet wird.

Figur 2F zeigt einen Querschnitt durch eine Öffnung 4 einer Rohrleitung 3, welche eine dreieckige Öffnung aufweist, so dass ein Nebenkomponentenstrom B mit einer im wesentlichen dreieckigen Form gebildet wird.

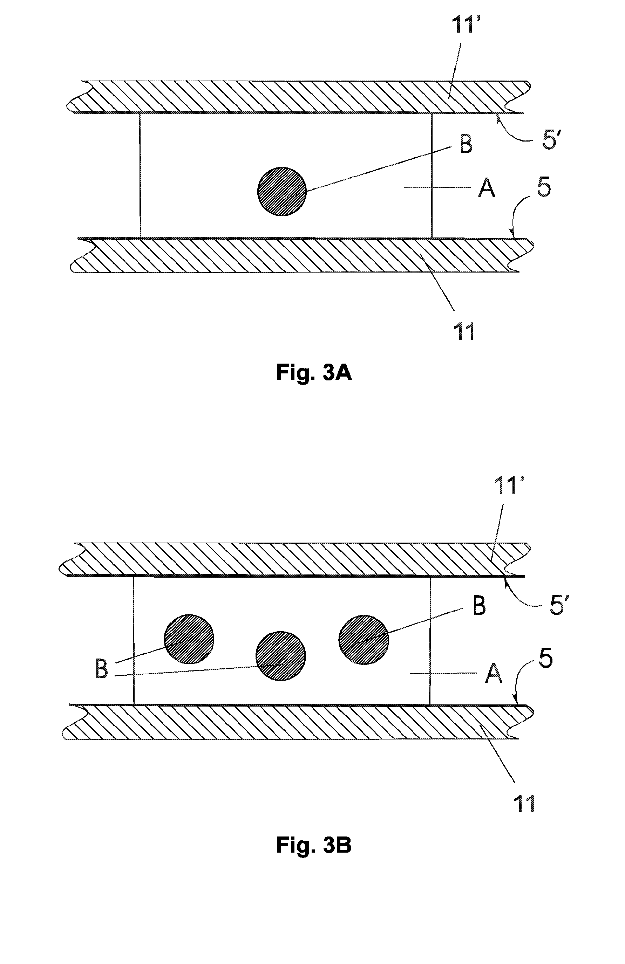

Figur 3A stellt schematisch einen Querschnitt durch einen Kleb- oder Dichtstoff mit einer Hauptkomponente A und mit einem Nebenkomponentenstrom B dar, welcher sich zwischen zwei Substraten, einem ersten Substrat 11 und einem zweiten Substrat 11' befindet. In einer Ausführungsform wird der Kleb- oder Dichtstoff AB auf die erste Substratoberfläche 5 appliziert, vorzugsweise als Klebstoffraupe, und das zweite Substrat 11' wird mit der zweiten Oberfläche 5' auf den Kleb- oder Dichtstoff AB appliziert. In einer anderen Ausführungsform wird der Kleb- oder Dichtstoff AB zwischen zwei Substrate eingebracht, vorzugsweise als Dichtstofffuge. Der Massenmittelpunkt des Nebenkomponentenstroms B liegt zwischen dem Massenmittelpunkt der Hauptkomponente A und der Substratoberfläche 5 vor. In dieser Anordnung härtet die Hauptkomponente A sowohl von den Seiten her, d.h. wo sie nicht mit den Substraten in Kontakt steht und damit mit der Luftfeuchtigkeit in Kontakt kommt, wie auch im Inneren vom Bereich des Nebenkomponentenstroms B her aus. Somit härtet der Kleb- oder Dichtstoff schnell aus.

Figur 3B stellt schematisch einen Querschnitt durch einen zwischen zwei Substraten, einem ersten Substrat 11 und einem zweiten Substrat 11', applizierten Kleb- oder Dichtstoff mit einer Hauptkomponente A und mit mindestens einem Nebenkomponentenstrom B dar wie für Figur 3A beschrieben, ausser dass in Figur 3B der Kleb- oder Dichtstoffstrom AB drei Nebenkomponentenströme B aufweist, welche bewirken, dass die Hauptkomponente A noch schneller aushärtet. Die drei Nebenkomponentenströme B sind vorzugsweise so in der Hauptkomponente A angeordnet, dass sie die Aushärtung an Stellen der Hauptkomponente A beschleunigen, die nicht direkt mit der Umgebungsfeuchte in Kontakt kommen.

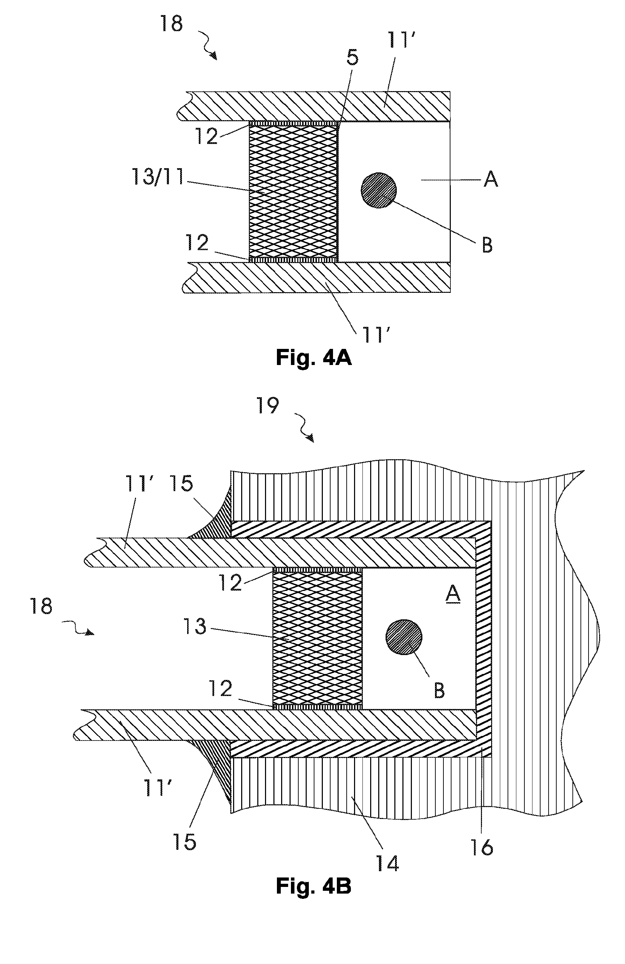

Figur 4A zeigt eine schematische Darstellung eines Teilquerschnitts durch eine Mehrfachisolierglasscheibe 18 mit zwei Glasscheiben 11'. Ein Abstandhalter 13 aus starrem Material, wie zum Beispiel Kunststoff oder vorzugsweise Aluminium, stellt den gewünschten Abstand zwischen den zwei Glasscheiben her. Der Abstandhalter 13 ist über eine Schicht 12 aus Butylkautschuk mit den Scheiben verbunden. Zusätzlich umfasst die Mehrfachisolierglasscheibe 18 einen Kleb- und/oder Dichtstoff AB aus einer Hauptkomponente A und mindestens einer Nebenkomponente B zur Verklebung und Abdichtung der zwei Glasscheiben. In dieser Anordnung wird die Fuge zwischen den zwei Glasscheiben 11' und dem Abstandhalter 13 beziehungsweise Butylschicht 12 mit Kleb- und/oder Dichtstoff AB aufgefüllt und der Kleb- und/oder Dichtstoff AB wird somit auf die Oberfläche 5 des Abstandhalters 13 aufgetragen. Der Abstandhalter 13 ist hier das erste Substrat 11, auf den der Kleb- und/oder Dichtstoff AB aufgetragen wird.

Figur 4B zeigt eine schematische Darstellung eines Querschnitts durch eine Mehrfachisolierglasscheibe wie für Figur 4A beschrieben, welche mit einem Rahmen eines Fensters oder einer Türe verklebt ist. Die Mehrfachisolierglasscheibe 18 wird bevorzugt über einen Klebstoff 16 mit einem Rahmen 14 verbunden, welcher in einer Ausführungsform in einen Hohlraum zwischen Mehrfachisolierglasscheibe und Rahmen nach einem üblichen Verfahren eingepresst wird oder in einer anderen Ausführungsform entweder stirnseitig oder längsseitig auf mindestens eine Glasscheibe der Mehrfachisolierglasscheibe appliziert wird und mit einem Rahmen aus einem oder mehreren Teilen verklebt wird. Der Hohlraum für die Klebstoffaufnahme ist neben dem Rahmen und der Scheibe durch eine Abdichtung 15, vorzugsweise eine Dichtungslippe begrenzt. Der Klebstoff 16 füllt in dieser Ausführungsform den Hohlraum zwischen Mehrfachisolierglasscheibe 18 und dem Rahmen 14 im wesentlichen vollständig aus. Es ist aber auch möglich, dass der Klebstoff 16 nur stirnseitig von der Mehrfachisolierglasscheibe 18, das heisst im Bereich der Hauptkomponente A oder längsseitig von der Mehrfachisolierglasscheibe 18, das heisst zwischen den Substraten 11 und/oder 11' aus Glas und dem Rahmen 14 vorliegt. Der Abstand zwischen Scheibe und Rahmen beträgt vorzugsweise etwa 3 bis 6 mm.

Selbstverständlich ist die Erfindung nicht auf die gezeigten und beschriebenen Ausführungsbeispiele beschränkt. Es versteht sich, dass die vorstehend genannten Merkmale der Erfindung nicht nur in der jeweils angegebenen Kombination, sondern auch in anderen Modifikationen, Kombinationen und Abänderungen oder in Alleinstellung verwendbar sind, ohne den Rahmen der Erfindung zu verlassen.

### Bezugszeichenliste

- A: Hauptkomponente/Hauptkomponentenstrom
- B: Nebenkomponente/Nebenkomponentenstrom
- AB: Kleb- oder Dichtstoffstrom umfassend Hauptkomponente A und Nebenkomponente B, wobei die Hauptkomponente A die Nebenkomponente B vollständig ummantelt
- R: Applikationsrichtung
- 1: Zuleitung
- 2: Gehäuse
- 3: Rohrleitung
- 4: Öffnung der Rohrleitung
- 5: erste Substratoberfläche
- 5': zweite oder weitere Substratoberfläche
- 6: Klebstoffraupe
- 7: Applikationsdüse
- 8: dreieckiger Ausschnitt
- 9: Düse
- 10: Applikationsapparatur
- 11: erstes Substrat
- 11': zweites oder weiteres Substrat
- 12: Butylschicht
- 13: Abstandhalter
- 14: Rahmen
- 15: Abdichtung
- 16: Klebstoff
- 17: Applikationsdüsenöffnung
- 18: Mehrfachisolierglasscheibe
- 19: Fenster- oder Türverklebung

## Patentansprüche

1. Verfahren zur Applikation eines feuchtigkeitshärtenden Kleb- oder Dichtstoffes, umfassend die Schritte:
a) Einbringen mindestens eines Stroms einer Nebenkomponente B, umfassend Wasser, über mindestens eine Rohrleitung (3) ins Innere eines Stroms einer Hauptkomponente A einer Zusammensetzung umfassend mindestens ein Prepolymer mit mindestens zwei feuchtigkeitsreaktiven Gruppen, unter Bildung eines Kleb- oder Dichtstoffstroms AB, bei welchem die Nebenkomponente B vollständig von der Hauptkomponente A ummantelt ist;
b) Kontaktieren mindestens einer Oberfläche (5) mindestens eines Substrats (11) mit dem Kleb- oder Dichtstoffstrom AB.

2. Verfahren nach Anspruch 1, **dadurch gekennzeichnet, dass** im Kleb- oder Dichtstoffstrom AB die Nebenkomponente B nicht mit der Hauptkomponente A vermischt ist.

3. Verfahren nach einem der Ansprüche 1 oder 2, **dadurch gekennzeichnet, dass** Schritt a) ohne Mischer erfolgt.

4. Verfahren nach einem der Ansprüche 1 bis 3, **dadurch gekennzeichnet, dass** die Hauptkomponente A mindestens eine Isocyanatgruppe und/oder mindestens eine Alkoxysilangruppe umfasst.

5. Verfahren nach einem der Ansprüche 1 bis 4, **dadurch gekennzeichnet, dass** die Nebenkomponente B über mehr als eine Rohrleitung (3) ins Innere der Hauptkomponente A eingebracht wird, unter Bildung von mehr als einem Strom, vorzugsweise zwei oder drei Ströme der Nebenkomponente B im Inneren des Hauptkomponentenstroms A, welche vollständig vom Hauptkomponentenstrom A ummantelt sind.

6. Verfahren nach einem der Ansprüche 1 bis 4, **dadurch gekennzeichnet, dass** die mindestens eine Rohrleitung (3) mehr als eine Öffnung (4), vorzugsweise zwei oder drei Öffnungen (4) aufweist, durch welche die Nebenkomponente B ins Innere der Hauptkomponente A eingebracht wird, unter Bildung von mehr als einem Strom, vorzugsweise zwei oder drei Ströme der Nebenkomponente B im Inneren des Hauptkomponentenstroms A, welche vollständig vom Hauptkomponentenstrom A ummantelt sind.

7. Verfahren nach einem der Ansprüche 1 bis 6, **dadurch gekennzeichnet, dass** die mindestens eine Öffnung (4) der Rohrleitung (3), durch welche die Nebenkomponente B ins Innere der Hauptkomponente A eingebracht wird, rund oder oval, vorzugsweise rund ist.

8. Verfahren nach einem der Ansprüche 1 bis 7, **dadurch gekennzeichnet, dass** die mindestens eine Öffnung (4) der Rohrleitung (3), durch welche die Nebenkomponente B ins Innere der Hauptkomponente A eingebracht wird, eine Düse ist.

9. Verfahren nach einem der Ansprüche 1 bis 8, **dadurch gekennzeichnet, dass** im Querschnitt des Kleb- oder Dichtstoffstroms AB zu dessen Applikationsrichtung der Massenmittelpunkt des Hauptkomponentenstroms A im Bereich des Massenmittelpunktes des mindestens einen Nebenkomponentenstroms B vorliegt.

10. Verfahren nach einem der Ansprüche 1 bis 8, **dadurch gekennzeichnet, dass** im Querschnitt des Kleb- oder Dichtstoffstroms AB zu dessen Applikationsrichtung der Massenmittelpunkt des mindestens einen Nebenkomponentenstroms B zwischen dem Massenmittelpunkt des Hauptkomponentenstroms A und der mindestens einen Substratoberfläche vorliegt.

11. Verfahren nach einem der Ansprüche 1 bis 10, **dadurch gekennzeichnet, dass** die wässrige Nebenkomponente im Überschuss, in Bezug auf das stöchiometrische Verhältnis von Wasser zu NCO, zudosiert wird.

12. Verfahren nach einem der Ansprüche 1 bis 11, **dadurch gekennzeichnet, dass** das mindestens eine Substrat (11) in Schritt b) aus Glas ist.

13. Verfahren nach Anspruch 12, **dadurch gekennzeichnet, dass** mindestens ein weiteres Substrat (11') aus Glas, Holz, Lack oder Kunststoff, insbesondere Polyvinylchlorid ist.

14. Auf mindestens eine Substratoberfläche applizierter Kleb- oder Dichtstoff, **dadurch gekennzeichnet, dass** der Kleb- oder Dichtstoff nach einem Verfahren nach einem der Ansprüche 1 bis 12 appliziert ist.

15. Kleb- oder Dichtstoff nach Anspruch 14, **dadurch gekennzeichnet, dass** der Kleb- oder Dichtstoff ausgehärtet ist.

16. Verwendung eines Kleb- oder Dichtstoffs nach einem der Ansprüche 14 oder 15 zur Verklebung und/oder Abdichtung von mindestens zwei Substratoberflächen.

17. Verfahren zum Verkleben und/oder Abdichten von mindestens zwei Substraten umfassend die Schritte:
i) Applizieren eines Kleb- oder Dichtstoffes nach einem Verfahren nach einem der Ansprüche 1 bis 12 auf mindestens eine Oberfläche (5) mindestens eines Substrats (11) und Kontaktieren des applizierten Kleb- oder Dichtstoff mit einer Oberfläche (5') eines weiteren Substrats (11'); oder
Applizieren eines Kleb- oder Dichtstoffes nach einem Verfahren nach einem der Ansprüche 1 bis 12 zwischen mindestens zwei Substrate (11, 11'); und
ii) Aushärten des applizierten Kleb- oder Dichtstoffes.

18. Mehrfachisolierglasscheibe (18) umfassend mindestens zwei Glasscheiben (11'), mindestens einen Kleb- oder Dichtstoff (AB), und mindestens einen Abstandhalter (13), wobei die mindestens zwei Glasscheiben (11') über den Abstandhalter (13) in Kontakt sind und der Kleb- oder Dichtstoff (AB) zwischen den mindestens zwei Glasscheiben (11') angeordnet ist, **dadurch gekennzeichnet, dass** der Kleb- oder Dichtstoff (AB) nach einem Verfahren nach einem der Ansprüche 1 bis 12 auf den mindestens einen Abstandhalter (13) appliziert worden ist und der Kleb- oder Dichtstoff mit den mindestens zwei Glasscheiben (11') in Kontakt ist.

19. Mehrfachisolierglasscheibe (18) nach Anspruch 18, zusätzlich umfassend mindestens eine Butylschicht (12) über welche der Abstandhalter (13) mit den mindestens zwei Glasscheiben (11') in Kontakt ist.

20. Fenster oder Türe, **dadurch gekennzeichnet, dass** das Fenster oder die Türe mindestens eine Mehrfachisolierglasscheibe (18) nach Anspruch 18 oder 19 umfasst, welche mit einem Rahmen (14) verbunden ist.

21. Fenster oder Türe nach Anspruch 20, **dadurch gekennzeichnet, dass** die mindestens eine Mehrfachisolierglasscheibe (18) mit dem Rahmen (14) verklebt ist.
